# EUROPEAN PATENT APPLICATION

(11) **EP 3 991 885 A1**
(43) Date of publication of application: **04.05.2022**
(21) Application number: 20861296.0
(22) Date of filing: 17.08.2020
(51) Int. Cl.: B23B 25/06, B23B 3/30, B23B 5/14, B23Q 17/09

(54) **MACHINE TOOL AND CONTROL DEVICE FOR MACHINE TOOL**

(30) Priority: 03.09.2019 JP 2019160734
(71) Applicant: Citizen Watch Co., Ltd., Nishitokyo-shi, Tokyo 188-8511 (JP); Citizen Machinery Co., Ltd., Nagano 389-0206 (JP)
(72) Inventor: SUZUKI Toshiyuki, Kitasaku-gun, Nagano 389-0206 (JP)
(74) Representative: Ullrich & Naumann PartG mbB
(86) International application number: PCT/JP2020/031015
(87) International publication number: WO 2021/044834

(57) **Abstract**

A machine tool and a control device for the machine tool that accurately detect a defect in a cutting-off process due to breakage of a cutting-off bit and the like is provided.

The machine tool comprises: a spindle 110 for holding one end side of a workpiece W; an opposed chuck 131 that is opposed to the spindle 110 and is movable with holding another end side of the workpiece W; and a spindle moving motor 122 for moving the spindle 110, wherein the machine tool is provided with load detecting means 172 for detecting a load of the spindle moving motor 122, and workpiece separation detecting means 173 for detecting a defect in a cutting-off process from the load in performing a taking out operation.

## Description

### [Technical Field]

The present invention relates to a machine tool and a control device for the machine tool.

### [Background Art]

Conventionally, there is known an automatic lathe configured so that the main machining is performed in a state where a workpiece is gripped on the spindle headstock side, and after the main machining is completed, the opposed spindle headstock is moved forward to grip another end side of the workpiece and a cutting-off process is performed with a cutting-off bit, and after the cutting-off process is terminated, the opposed spindle headstock gripping the cut-off workpiece is moved backward (see, for example, the patent literature 1).

In this automatic lathe, after the cutting-off process is terminated, it is indirectly detected whether or not there is breakage of the cutting-off bit by moving backward the opposed spindle headstock.

Specifically, a torque limit is applied to a servomotor for feeding the opposed spindle headstock, and in a case where a load equal to or higher than the above torque limit value is applied, the automatic lathe is stopped.

### [Citation List]

### [Patent Literature]

[Patent Literature 1] JP 3355213 B1

### [Summary of Invention]

### [Technical Problem]

However, in the above-described machine tool, since the torque value during the backward movement of the opposed spindle headstock is detected, the torque value due to the breakage of the cutting-off bit is added to the torque value due to the backward movement of the opposed spindle headstock.

Therefore, if the torque value due to the breakage of the cutting-off bit is smaller than the torque value due to the backward movement of the opposed spindle headstock, the torque value of the servomotor for feeding the opposed spindle headstock does not reach the torque limit value. Thus, there is a risk that the backward movement of the opposed spindle headstock is not stopped even if there is breakage in the cutting-off bit.

Therefore, the present invention is for solving the above-described problem of the prior art. That is to say, the object of the present invention is to provide a machine tool and a control device for the machine tool that accurately detect a defect in the cutting-off process due to the breakage of the cutting-off bit and the like.

### [Solution to Problem]

Firstly, the present invention is characterized by a machine tool comprising: a spindle for holding one end side of a workpiece; an opposed chuck that is opposed to the spindle and is movable with holding another end side of the workpiece; and a spindle moving motor for moving the spindle, and after a cutting-off process, in which a machined portion of the workpiece and an unmachined portion of the workpiece are separated from each other in a state where the workpiece is held by the spindle and the opposed chuck, is terminated, the machine tool taking out the machined portion of the workpiece by moving the opposed chuck in a state where the spindle is stopped, wherein the machine tool is provided with load detecting means for detecting a load of the spindle moving motor, and workpiece separation detecting means for detecting a defect in a cutting-off process from the load in performing the taking out.

Secondly, the present invention is characterized in that the load detecting means detects a current value of the spindle moving motor as a load.

Thirdly, the present invention is characterized in that the workpiece separation detecting means detects a defect in a cutting-off process from an increase in the current value.

Fourthly, the present invention is characterized in that the opposed chuck is attached to a rear spindle which is rotatable and opposed to the spindle.

Fifthly, the present invention is characterized in that if the workpiece separation detecting means determines that there is a defect in a cutting-off process, the movement of the opposed chuck is stopped.

Sixthly, the present invention is characterized by a control device for controlling a machine tool, the machine tool comprising: a spindle for holding one end side of a workpiece; an opposed chuck that is opposed to the spindle and is movable with holding another end side of the workpiece; and a spindle moving motor for moving the spindle, and after a cutting-off process, in which a machined portion of the workpiece and an unmachined portion of the workpiece are separated from each other in a state where the workpiece is held by the spindle and the opposed chuck, is terminated, the machine tool taking out the machined portion of the workpiece by moving the opposed chuck in a state where the spindle is stopped, wherein the control device is provided with load detecting means for detecting a load of the spindle moving motor, and workpiece separation detecting means for detecting a defect in a cutting-off process from the load in performing the taking out.

### [Advantageous Effect of Invention]

The present invention can produce the following effects.

If a taking out operation is performed in a state where the machined portion of the workpiece is not separated from the unmachined portion of the workpiece, the opposed chuck moves the spindle in the stopped state via the workpiece. Thereby, the load on the spindle moving motor for moving the spindle changes.

Then, the load detecting means and the workpiece separation detecting means detect whether or not the machined portion of the workpiece and the unmachined portion of the workpiece are separated from each other from the load of the spindle moving motor. Thus, a state, in which the machined portion of the workpiece is not separated from the unmachined portion of the workpiece, is more easily detected than in the case where the current value applied to the opposed chuck moving means is used to detect whether or not the machined portion of the workpiece is separated from the unmachined portion of the workpiece. Therefore, it is possible to accurately detect that the workpiece W is not separated in the cutting-off process or that there is a defect in the cutting-off process due to the breakage of the cutting-off bit and the like.

The opposed chuck is attached to the rear spindle which is rotatable and opposed to the spindle. Thus, the degree of freedom in machining the workpiece is improved. Therefore, more complicated machining can be performed.

If the workpiece separation detecting means determines that there is a defect in a cutting-off process, the movement of the opposed chuck by the opposed chuck moving means is stopped. Thus, the opposed chuck does not pull the machined portion of the workpiece. Therefore, the overload applied to the spindle moving motor can be removed.

The load detecting means and the workpiece separation detecting means detect whether or not the machined portion of the workpiece and the unmachined portion of the workpiece are separated from each other from the load of the spindle moving motor. Thus, a state, in which the machined portion of the workpiece is not separated from the unmachined portion of the workpiece, is more easily detected than in the case where the current value applied to the opposed chuck moving means is used to detect whether or not the machined portion of the workpiece is separated from the unmachined portion of the workpiece. Therefore, it is possible to accurately detect that the workpiece W is not separated in the cutting-off process or that there is a defect in the cutting-off process due to the breakage of the cutting-off bit and the like.

### [Brief Description of Drawings]

Figure 1 is a schematic view of a machine tool according to the example of the present invention.
Figure 2 is a flowchart showing an example of detecting a separation state of a workpiece.
Figure. 3A is a schematic view showing a state in which machining of the workpiece with a cutting tool is completed.
Figure 3B is a schematic view showing a state in which an opposed chuck grips the workpiece.
Figure 3C is a schematic view showing a machining state with a cutting-off tool.
Figure 3D is a schematic view showing a state in which a cutting-off process is terminated.

### [Description of Embodiments]

The specific embodiment of the present invention may be arbitrary as long as a machine tool comprises: a spindle for holding one end side of a workpiece; an opposed chuck that is opposed to the spindle and is movable with holding another end side of the workpiece; and a spindle moving motor for moving the spindle, and after a cutting-off process, in which a machined portion of the workpiece and an unmachined portion of the workpiece are separated from each other in a state where the workpiece is held by the spindle and the opposed chuck, is terminated, the machine tool takes out the machined portion of the workpiece by moving the opposed chuck in a state where the spindle is stopped, wherein the machine tool is provided with load detecting means for detecting a load of the spindle moving motor, and workpiece separation detecting means for detecting a defect in a cutting-off process from the load in performing the taking out, and a defect in the cutting-off process due to the breakage of the cutting-off bit and the like is accurately detected.

### [Example]

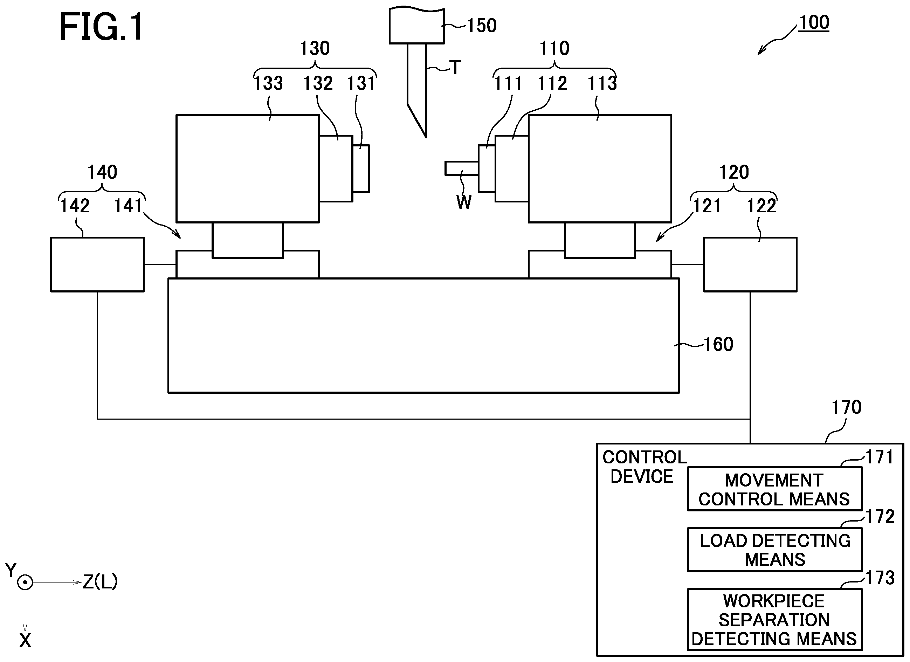

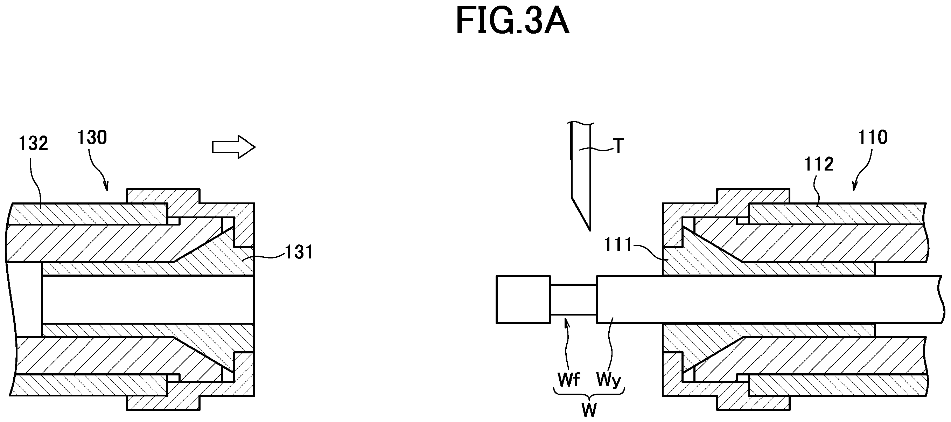

Hereinafter, with reference to Figs. 1 to 3D, a machine tool and a control device for the machine tool according to an example of the present invention will be described.

First, with reference to Fig.1, the outline of the machine tool and the control device for the machine tool according to the example of the present invention will be described.

Fig. 1 is a schematic view of a machine tool according to the example of the present invention.

As shown in Fig. 1, a machine tool 100 is provided with a spindle 110 for holding one end side of a workpiece W, spindle moving means 120 for moving the spindle 110 in the long axis direction L of the workpiece W, a rear spindle 130 that is opposed to the spindle 110 and is for holding another end side of the workpiece W, and rear spindle moving means 140 for moving the rear spindle 130 in the long axis direction L of the workpiece W.

Further, the machine tool 100 is provided with a tool post 150 including a cutting tool T such as a tool bit for cutting the workpiece W or a cutting-off tool for cutting-off the workpiece W, a bed 160 on which the spindle 110 and the rear spindle 130 are placed, and a control device 170 for electronically controlling each component of the machine tool 100.

The spindle 110 has a chuck 111 for griping one end side of the workpiece W, a spindle main body 112 with the tip end to which the chuck 111 is attached, and a spindle headstock 113 for supporting the rear end side of the spindle main body 112.

The spindle main body 112 can be rotated by rotationally driving a not-shown spindle rotation motor (for example, a conventionally known built-in motor).

The spindle headstock 113 is mounted so as to be movable in the Z-axis direction (long axis direction L of the workpiece W) by the spindle moving means 120.

The spindle moving means 120 has a spindle moving mechanism 121 on which the spindle headstock 113 is mounted and which is mounted on the bed 160, and a spindle moving motor 122 for driving the spindle moving mechanism 121.

The spindle moving motor 122 is, for example, a linear servo motor.

The rear spindle 130 has an opposed chuck 131 for griping another end side of the workpiece W, a rear spindle main body 132 with the tip end to which the opposed chuck 131 is attached, and a rear spindle headstock 133 for supporting the rear end side of the rear spindle main body 132.

The rear spindle main body 132 can be rotated by rotationally driving a not-shown rear spindle rotation motor (for example, a conventionally known built-in motor).

The rear spindle headstock 133 is mounted so as to be movable in the Z-axis direction (long axis direction L of the workpiece W) by the rear spindle moving means 140.

Therefore, the rear spindle 130 is movable in the Z-axis direction.

The rear spindle moving means 140 has a rear spindle moving mechanism 141 on which the rear spindle headstock 133 is mounted and which is mounted on the bed 160, and a rear spindle moving motor 142 for driving the rear spindle moving mechanism 141.

The rear spindle moving motor 142 is, for example, a linear servomotor, and since the opposed chuck 131 is moved by driving the rear spindle moving motor 142, the rear spindle moving motor 142 functions as opposed chuck moving means for moving the opposed chuck 131.

The tool post 150 can be moved by not-shown tool post moving means in the X-axis direction (direction orthogonal to the Y-axis direction and Z-axis direction), Y-axis direction (direction orthogonal to the Z-axis direction and X-axis direction), and Z-axis direction.

The control device 170 has movement control means 171 for controlling the spindle moving motor 122 and the rear spindle moving motor 142, load detecting means 172 for detecting the load of the spindle moving motor 122, and workpiece separation detecting means 173 for detecting from the load detected by the load detecting means 172 whether or not a machined portion of the workpiece W is separated from an unmachined portion of the workpiece W.

In the present example, the load detecting means 172 detects a current value of the spindle moving motor 122 as a load.

In the present example, the workpiece separation detecting means 173 detects whether or not the machined portion of the workpiece W is separated from the unmachined portion of the workpiece W (that is, a defect in the cutting-off process) from an increase in the current value of the spindle moving motor 122 detected by the load detecting means 172.

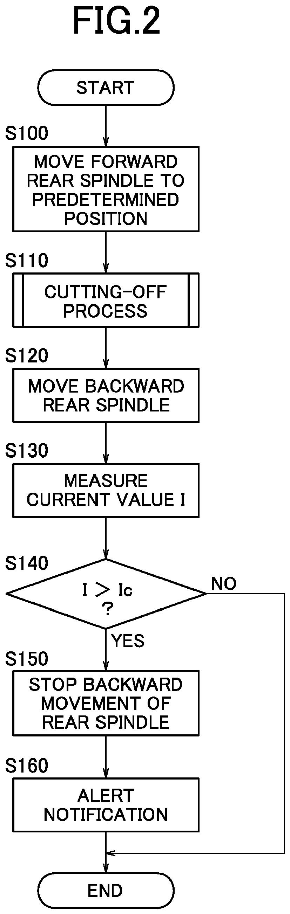

Next, with reference to Figs. 2 to 3D, a taking out operation of the machined portion of the workpiece W in the machine tool 100 in the present example will be described.

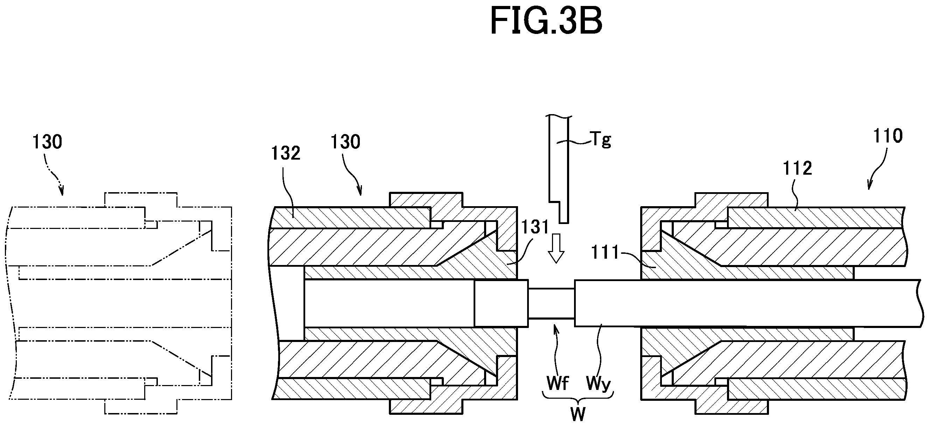

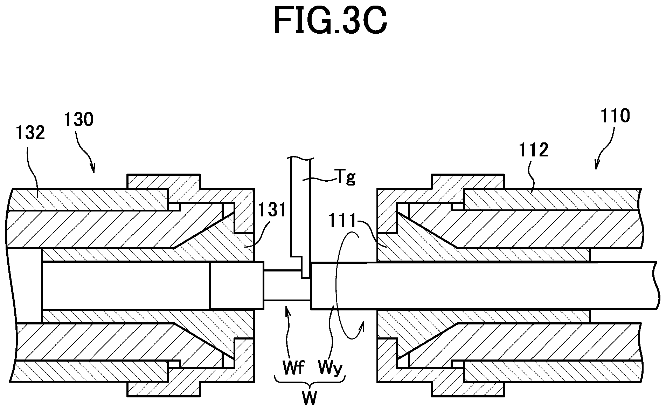

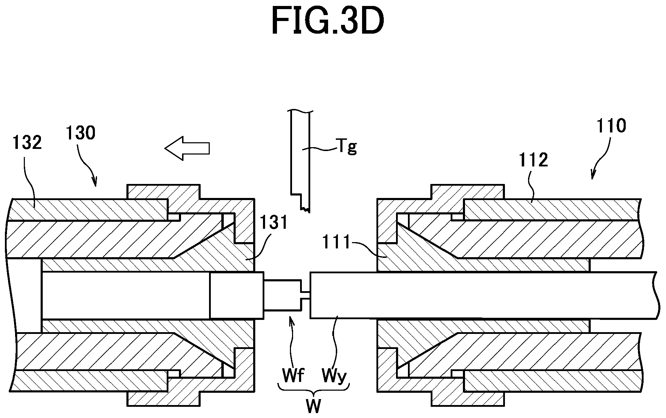

Fig. 2 is a flowchart showing an example of detecting a separation state of the workpiece, Fig. 3A is a schematic view showing a state in which machining of the workpiece with a cutting tool is completed, Fig. 3B is a schematic view showing a state in which the opposed chuck grips the workpiece, Fig. 3C is a schematic view showing a machining state with a cutting-off tool, and Fig. 3D is a schematic view showing a state in which the cutting-off process is terminated.

As shown in Fig. 3A, when the machining of the workpiece W with a cutting tool such as a tool bit is completed, a machined portion Wf and an unmachined portion Wy are formed on the workpiece W.

In this state, as shown in Fig. 3B, the rear spindle 130 is moved to a predetermined position where the opposed chuck 131 grips the machined portion Wf of the workpiece W (step S100).

In a state where the spindle 110 and the opposed chuck 131 hold the workpiece W, in order to separate the unmachined portion Wy and the machined portion Wf of the workpiece W from each other, the cutting-off process is performed with a cutting-off tool Tg as shown in Fig. 3C. (Step S110).

Then, after the predetermined cutting-off process is terminated, the spindle 110 is stopped, and as shown in Fig. 3D, the cutting-off tool Tg is retracted from the workpiece W.

Next, in order to take out the machined portion Wf of the workpiece W, the rear spindle 130 is moved backward from the spindle 110 (step S120).

Next, a current value I of the spindle moving motor 122 is measured by the load detecting means 172. (Step S130)

Then, it is determined whether or not this current value I is larger than a predetermined current value Ic (for example, the current value applied in order to stop the spindle moving motor 122) (step S140).

If the current value I is equal to or less than the predetermined current value Ic, the spindle moving motor 122 is not driven, that is to say, the spindle 110 is stopped. Then, the workpiece separation detecting means 173 determines that it is in a separated state in which the machined portion Wf of the workpiece W is separated from the unmachined portion Wy of the workpiece W, and the flow goes to the end.

If the current value I is larger than the predetermined current value Ic, the workpiece separation detecting means 173 determines that it is in an unseparated state in which the machined portion Wf of the workpiece W is not separated from the unmachined portion Wy of the workpiece W.

This is because, as shown in Fig. 3D, if the cutting-off tool Tg is broken during the cutting-off process and the cutting-off process is terminated in a state where the workpiece W is not separated, when the rear spindle 130 is moved backward, the spindle 110 in the stopped state is moved via the workpiece W, and thus, the spindle moving motor 122 is overloaded due to the movement of the spindle 110, and the current value I increases.

If the workpiece separation detecting means 173 determines that the workpiece W is in the unseparated state, the movement control means 171 stops the backward movement of the rear spindle 130 by the rear spindle moving motor 142 (step S150).

Then, the alert is notified to the operator (step S160).

According to the machine tool 100 and the control device 170 described above, a state, in which the machined portion Wf of the workpiece W is not separated from the unmachined portion Wy of the workpiece W, is more easily detected than in the case where the current value applied to the rear spindle motor 142 is used to detect whether or not the machined portion Wf of the workpiece W is separated from the unmachined portion Wy of the workpiece. Therefore, it is possible to accurately detect that the workpiece W is not separated by the cutting-off process.

Although an example of the present invention has been described above, the present invention is not limited to the above example.

For example, in the present example, the rear spindle headstock 133 is mounted so as to be movable in the Z-axis direction (long axis direction of the workpiece W) by the rear spindle moving means 140, but the moving direction of the rear spindle headstock 133 is not limited to this direction.

For example, as long as the control device 170 can control the machine tool 100, the control device 170 may be incorporated in the machine tool 100 or may be separated from the machine tool 100.

### [Reference Signs List]

- 100: machine tool
- 110: spindle
- 111: chuck
- 112: spindle main body
- 113: spindle headstock
- 120: spindle moving means
- 121: spindle moving mechanism
- 122: spindle moving motor
- 130: rear spindle
- 131: opposed chuck
- 132: rear spindle main body
- 133: rear spindle headstock
- 140: rear spindle moving means
- 141: rear spindle moving mechanism
- 142: rear spindle moving motor (opposed chuck moving means)
- 150: tool post
- 160: bed
- 170: control device
- 171: movement control means
- 172: load detecting means
- 173: workpiece separation detecting means

- W: workpiece
- Wf: machined portion
- Wy: unmachined portion
- T: cutting tool
- Tg: cutting-off tool
- L: long axis direction of workpiece
- I: current value of spindle moving motor
- Ic: predetermined current value

## Claims

1. A machine tool comprising: a spindle for holding one end side of a workpiece; an opposed chuck that is opposed to the spindle and is movable with holding another end side of the workpiece; and a spindle moving motor for moving the spindle, and after a cutting-off process, in which a machined portion of the workpiece and an unmachined portion of the workpiece are separated from each other in a state where the workpiece is held by the spindle and the opposed chuck, is terminated, the machine tool taking out the machined portion of the workpiece by moving the opposed chuck in a state where the spindle is stopped, wherein the machine tool is provided with
load detecting means for detecting a load of the spindle moving motor, and
workpiece separation detecting means for detecting a defect in a cutting-off process from the load in performing the taking out.

2. The machine tool according to claim 1, wherein the load detecting means detects a current value of the spindle moving motor as a load.

3. The machine tool according to claim 2, wherein the workpiece separation detecting means detects a defect in a cutting-off process from an increase in the current value.

4. The machine tool according to claim 1, wherein the opposed chuck is attached to a rear spindle which is rotatable and opposed to the spindle.

5. The machine tool according to claim 4, wherein if the workpiece separation detecting means determines that there is a defect in a cutting-off process, the movement of the opposed chuck is stopped.

6. A control device for controlling a machine tool, the machine tool comprising: a spindle for holding one end side of a workpiece; an opposed chuck that is opposed to the spindle and is movable with holding another end side of the workpiece; and a spindle moving motor for moving the spindle, and after a cutting-off process, in which a machined portion of the workpiece and an unmachined portion of the workpiece are separated from each other in a state where the workpiece is held by the spindle and the opposed chuck, is terminated, the machine tool taking out the machined portion of the workpiece by moving the opposed chuck in a state where the spindle is stopped, wherein the control device is provided with
load detecting means for detecting a load of the spindle moving motor, and
workpiece separation detecting means for detecting a defect in a cutting-off process from the load in performing the taking out.
